# EUROPÄISCHE PATENTSCHRIFT

(11) **EP 1 484 342 B1**
(45) Veröffentlichungstag und Bekanntmachung des Hinweises auf die Patenterteilung: **26.09.2007**
(21) Anmeldenummer: 03012652.8
(22) Anmeldetag: 04.06.2003
(51) Int. Cl.: C08F 6/10, C09J 133/06

(54) **Kontinuierliches zweistufiges Verfahren zur Herstellung von lösemittelfreien Polyacrylat-Schmelzhaftklebern**
Continuous two step process for manufacturing solvent-free polyacrylate hot-melt pressure-sensitive adhesives
Procédé continu de préparation en deux étapes d' adhésifs polyacryliques sans solvant, thermofusibles et sensibles à la pression

(43) Veröffentlichungstag der Anmeldung: 08.12.2004
(73) Patentinhaber: tesa AG, 20253 Hamburg (DE)
(72) Erfinder: Husemannn, Marc, Dr., 22605 Hamburg (DE); Zöllner, Stephan, Dr., 21244 Buchholz /Nordheide (DE); Massow, Klaus, 22393 Hamburg (DE); Henke, Frank, Dr., 21629 Neu Wulmstorf (DE)

(56) Entgegenhaltungen:
- EP-A- 1 293 547

## Beschreibung

Die Erfindung betrifft ein neues und sehr effizientes Verfahren zur Herstellung von Acrylathotmelts aus lösungsmittelhaltigen Polyacrylaten.

Im Bereich der Haftklebemassen besteht aufgrund technologischer Weiterentwicklungen im Beschichtungsverfahren ein fortlaufender Bedarf für Neuentwicklungen. In der Industrie sind Heißschmelzverfahren (Hotmeltverfahren) mit lösungsmittelfreier Beschichtungstechnik zur Herstellung von Haftklebemassen von anwachsender Bedeutung, da die Umweltauflagen immer größer werden und die Preise für Lösungsmittel weiter steigen. Daher sollten Lösungsmittel so weit wie möglich aus dem Fertigungsprozeß für Haftklebebänder eliminiert werden. Diese Bestrebungen sind aber nur sehr schwer für Acrylathaftklebemassen zu realisieren, da diese immer noch in Lösungsmitteln hergestellt werden und die Umsetzung der Polymerisation in Substanz durch die zu hohe Viskosität der Polyacrylate bei hohen Molekulargewichten limitiert ist. Weiterhin ist die Vergelung von Substanzpolymerisationen immer noch ein großes Problem. Vergelte Polyacrylate lassen sich nicht mehr beschichten und sind somit als Haftklebemassen für Klebebänder ungeeignet.

Andererseits werden immer höhere Anforderungen an Klebemassen gestellt, da für industrielle Anwendungen transparente und witterungsstabile sowie temperaturstabile Haftklebemassen erforderlich sind (hohes Kohäsionsniveau auch bei höheren Temperaturen) und die zudem noch eine geringes Ausgasungsverhalten zeigen. Diese Anforderungen können nur durch Polyacrylate mit einem hohem Molekulargewicht erfüllt werden.

Aus der US 5 073 611 ist ein relativ niedermolekulares Acrylathotmelt bekannt, welches sich gut zum Hotmelt aufkonzentrieren lässt und durch einen UV-Vemetzungsmechanismus eine kohäsionssteigemde Komponente enthält. Bedingt durch das geringe mittlere Molekulargewicht wird aber dennoch kein befriedigendes Kohäsionsniveau bei Raumtemperatur und bei hohen Temperaturen erreicht.

In der EP 0 621 326 B1 wurde bereits ein Aufkonzentrationsprozess für lösemittelhaltige Acrylathaftklebemassen beschrieben. In diesem diskontinuierlichen Prozess werden hochmolekulare Acrylathaftklebemassen verarbeitet, aber das Lösemittel wird nicht recycelt, so dass mit diesem Prozess nur die generellen Vorteile einer Hotmeltbeschichtung genutzt werden können. Zudem sind die Verweilzeiten zu hoch, so dass durch die zu hohe Temperatureinwirkung das Polymer geschädigt wird (Molekulargewichtsabbau, Vergelung).

In der EP 1 293 547 wird die Verarbeitung von Acrylat-Hotmelts mittels reaktiver Extrusion beschrieben.

Die Aufgabe der Erfindung besteht daher darin, ein mit wenig Lösungsmittel arbeitendes Herstellungsverfahren für Hotmelt-verarbeitbare Polyacrylat-Haftklebemassen, die für die Herstellung von Klebebändern verwendet werden können, anzugeben, bei dem das Lösungsmittel recycliert werden kann.

Im Rahmen dieser Erfindung wurde erkannt, dass ein lösungsmittelarmes Hotmeltverfahren für Polyacraylate nur zu realisieren ist, wenn der größte Teil des Lösungsmittel recycelt und dem Polymerisationsprozess zurückgeführt wird. Weiterhin muss dieses Verfahren auch Polyacrylate mit hohem Molekulargewicht (ca. 800.000 g/mol) tolerieren, damit durch die langen Polymerketten ein hohes Kohäsionsniveau (Scherfestigkeit) erreicht wird. Die Aufkonzentration mit gleichzeitiger Wiederverwendung des Lösungsmittels setzt voraus, dass das Polyacrylat bis zu einem hohen Umsatz polymerisiert wurde (zur Vermeidung von Restmonomeren), und das keine Harze oder andere Zusätze im System enthalten sind, die leichtflüchtige Bestandteile freisetzen könnten und somit das Recyclingkonzept negativ beeinflussen. Diese Anforderungen lassen sich nur durch ein zweistufiges Verfahren realisieren.

Ein weiterer kritischer Punkt für ein Hotmelt-Verfahren ist die Schädigung des Polymers durch die Temperatur und Schereinwirkung. Zu lange Verweilzeiten und hohe Scherkräfte führen entweder zu einem Polymerabbau oder zu einer Vergelung der Haftklebemasse. Beide Effekte sind unerwünscht. Die Verknüpfung von kurzer Verweilzeit und geringer Scherkraft bereitet schwerwiegende Probleme, da, um kurze Verweilzeiten zu realisieren, der Extruder mit hoher Drehzahl und somit einer hohen spezifischen Antriebsenergie betrieben werden muss. Durch die hohe Drehzahl wird die Verweilzeit verringert, aber auch die Scherung der Haftklebemasse und damit das Potential.-der Polymerschädigung erhöht.

Einen weiteren Einfluß besitzt der Dampfdruck des Lösungsmittels. Um einen effizienten und schonenden Aufkonzentrationsprozess zu gewährleisten. Zur Aufkonzentration von Polyacrylaten werden diese Polymere bevorzugt in Lösungsmitteln mit einem hohen Dampfdruck hergestellt, da somit eine höhere Aufkonzentrationsquote erreicht werden kann und weniger spezifische Energie eingebracht werden muss, um das Lösungsmittel vom Polymer zu entfernen.

Überraschend und für den Fachmann nicht vorhersehbar wurden die aufgezeigten Nachteile mit einem Verfahren gelöst, wie es im Hauptanspruch dargestellt ist. Die Unteransprüche betreffen vorteilhafte Weiterentwicklungen der Erfindung.

Die Erfindung zeichnet sich dadurch aus, dass zur polymerschonenden Herstellung von im wesentlichen lösemittelfreien Polyacrylat-Schmelzhaftklebern unter Wiedereinsatz des im Verfahren verwendeten Lösemittels ein kontinuierliches, zweistufiges Verfahren mit den folgenden Schritten durchgeführt wird:
a) Polymerisation einer Polyacrylat-Haftklebemasse zu einem Monomerumsatz von > 99% in einem Lösemittel bzw. Lösemittelgemisch, das bei 100 Pas eine Dampfdrucktemperatur von weniger als -10°C aufweist;
b) kontinuierliches Vermischen der Polymerlösung mit Zusatz- und Hilfsstoffen, in erster Linie mit Antioxidantien, und (vorzugsweise siedefreies) Vorwärmen der Mischung unter erhöhtem Druck;
c) Aufkonzentration der Polymerlösung zu einem Restlösemittelgehalt von weniger als 0,1 Gew.-% in einem ersten Extruder unter Einfluss von Vakuum und erhöhten Extrudertemperaturen, wobei die spezifische Antriebsenergie für die erzeugten Polyacrylat-Haftklebemassen mit einer durchschnittlichen Molekularmasse M_{w} von 600.000 bis 900.000 g/mol weniger als 0,18 kWh/kg, besonders bevorzugt eine spezifische Antriebsenergie weniger als 0,15 kWh/kg beträgt und dabei eine Temperatur der Klebmasse im Austritt des Extruders von nicht mehr als 135°C, besonders bevorzugt von nicht mehr als 125°C erhalten wird;
d) Kondensation, Auffangen und Wiedereinsatz unter (a) des im Extruder abgezogenen Lösemittels in einer Quote von mehr als 80% der verwendeten Menge;
e) Compoundierung der vom Lösemittel befreiten Schmelzhaftklebemasse mit klebrigmachenden Harzen, Füllstoffen, Stabilisatoren, Vernetzern oder anderen Additiven in einem zweiten Extruder mit einer spezifischen Antriebsenergie von weniger als 0,05 kWh/kg, vorzugsweise mit einer spezifischen Antriebsenergie von weniger als 0,03 kWh/kg, wobei eine Temperatur der Klebmasse im Austritt des Extruders von nicht mehr als 125°C erhalten wird; und
f) Übergabe der fertig abgemischten lösungsmittelfreien Haftklebemasse an eine nachfolgende Beschichtungseinheit.

In einer besonders vorteilhaften Weiterentwicklung werden Polymere mit folgender Comonomer-Grundzusammensetzung eingesetzt:
(A) Acrylsäure und Methacrylsäure-Derivate mit einem Anteil von 70-100 Gewichtsprozent,

   CH₂=C(R₁)(COOR₂) (I)

   wobei R₁ = H oder CH₃ ist und R₂ = eine Alkylkette mit 2-20 C-Atomen.
(B) olefinisch ungesättigte Monomere mit funktionellen Gruppen, zu 0 - 30 Gew.-%, bezogen auf Komponente (A).

Die Zusammensetzung der entsprechenden Comonomere wird so gewählt, dass die resultierenden Haftklebemassen entsprechend D. Satas [Handbook of Pressure Sensitive Adhesive Technology, 1989, Verlag VAN NOSTRAND REINHOLD, New York] haftklebende Eigenschaften besitzen, wobei hier bevorzugt die statische Glasübergangstemperatur der Haftklebemasse unterhalb 25°C liegt.

Im ersten Schritt wird zur Herstellung der Acrylathaftklebemasse eine freie oder kontrollierte radikalische Polymerisation durchgeführt. Die radikalische Polymerisation wird bevorzugt in Gegenwart eines organischen Lösungsmittels durchgeführt. Es wird so wenig Lösungsmittel wie möglich eingesetzt. Die Polymerisationszeit beträgt - je nach Umsatz und Temperatur - zwischen 6 und 48 h. Das mittlere Molekulargewicht der Polymere variiert zwischen 300000 und 2000000 g/mol mehr bevorzugt zwischen 600000 und 900000 g/mol. Der Umsatz nach der Polymerisation beträgt > 99 %.

Zur Erzielung einer hohen Aufkonzentrationsquote für das Polymer werden sehr bevorzugt organische Lösungsmittel oder Lösungsmittelgemische mit einer Dampfdrucktemperatur von < -10°C zur Erzielung eines Druckes von 100 Pa verwendet (D.R. Lide, CRC Handbook of Chemistry and Physics, CRC Press, 1999-2000, London). Bevorzugte Beispiele für die Lösungsmittelhauptkomponente können sein Ester gesättigter Carbonsäuren (wie Ethylacetat), aliphatische Kohlenwasserstoffe (wie n-Hexan oder n-Heptan) oder Ketone (wie Aceton oder Methylethylketon). Sehr bevorzugt wird ein Lösungsmittelgemisch aus Aceton und Isopropanol eingesetzt, wobei der Isopropanolgehalt zwischen 1 und 10 Gewichtsprozent liegt.

Als Polymerisationsinitiatoren werden übliche radikalbildende Verbindungen, wie beispielsweise Peroxide und Azoverbindungen, eingesetzt. Auch Initiatorgemische können verwendet werden. Bei der Polymerisation können auch Thiole, Nitroxide, TEMPO-Derivate oder Thioester bzw. Thiocarbonate als weitere Regler zur Molekulargewichtssenkung und Verringerung der Polydispersität eingesetzt werden. Als weitere sogenannte Polymerisationsregler können z.B. auch Alkohole und Ether verwendet werden.

Die Polymerisation zur Herstellung der Acrylathaftklebemasse kann in Polymerisationsreaktoren durchgeführt werden, die im allgemeinen mit einem Rührer, mehreren Zulaufgefäßen, Rückflußkühler, Heizung und Kühlung versehen sind und für das Arbeiten unter N₂-Atmosphäre und Überdruck ausgerüstet sind.

Im erfindungsgemäßen Verfahren wird das Lösemittel in der ersten Stufe in einem Doppelschneckenaufkonzentrationsextruder unter vermindertem Druck entfernt, wobei bevorzugt das Lösemittel in drei Vakuumstufen abdestilliert wird. Der Doppelschneckenextruder kann gleich- oder gegenläufig betrieben werden. In einer bevorzugten Auslegung des Aufkonzentrationsextruders wird ein großvolumiger Extruder verwendet. Der Aufkonzentrationsextruder besitzt im Vergleich zum Compoundierextruder ein freies Volumen von größer als 3, sehr bevorzugt wird ein Verhältnis von größer 3.5. Durch das große Aufkonzentrationsvolumen kann der Aufkonzentrationsextruder mit geringer Drehzahl betrieben werden, wobei sich die Drehzahl durch die spezifische Antriebenergie definieren lässt. Um eine Polymerschonende Aufkonzentration zu gewährleisten, muss die Polymerlösung vor dem Eintritt in den Aufkonzentrationsextruder unter erhöhtem Druck auf Temperaturen zwischen 100 und 160°C aufgeheizt werden, wobei das Lösungsmittel/Gemisch nicht sieden sollte. Bevorzugt beträgt die Eintrittstemperatur der Polymerlösung zwischen 110 und 150°C, sehr bevorzugt zwischen 120 und 140°C. Vorteile der hohen Eintrittstemperatur der Polymerlösung in Verbindung mit dem hohen Dampfdruck des Lösungsmittels sind die leichte Entfernbarkeit des Lösungsmittel/bzw. Lösungsmittelgemisches.

Weiterhin muss, um eine Polymerschonende Aufkonzentration der Haftklebemasse zu gewährleisten, die spezifische Antriebsenergie unterhalb 0.18 kWh/kg liegen. Besonders polymerschonend und bevorzugt wird mit einer spezifischen Antriebsenergie von weniger als 0.15 kWh/kg aufkonzentriert.

Die Aufkonzentrationsquote im Aufkonzentrationsextruder liegt bei einem Restlösemittelanteil von < 0.5 %, bevorzugter < 0.3 %, sehr bevorzugt < 0.1 %.

Weiterhin ist zur polymerschonenden Weiterverarbeitung die Temperatur der Haftklebemasse entscheidend. Die Austrittstemperatur des Acrylathotmelts liegt nach der Aufkonzentration unterhalb 135°C, mehr bevorzugt unterhalb 125°C. Durch die geringe Temperatur wird eine Vercrackung (Vergelung) des Acrylathotmelts vermieden.

Das abdestillierte Lösemittel wird im erfindungsgemäßen Verfahren in einem Vorratsbehälter kondensiert und via Gaschromatographie (GC) analysiert. Die Recyclingquote beträgt mindestens 80 %. Im Vorratsbehälter oder in einem getrennten Mischbehälter wird frisches Lösungsmittel hinzugefügt. In einer besonders vorteilhaften Entwicklung wird für das Aceton/Isopropanol-Gemisch das ursprüngliche Verhältnis zum Zeitpunkt der Polymerisation wieder hergestellt. Das auf dieser Weise abgemischte und aufgefrischte Lösemittel wird dem Polymerisationsprozess in einem Recyclingkonzept wieder zugefügt.

Im zweiten Schritt des zweistufigen Verfahrens wird der Acrylathotmelt im inline-Prozess mit Harzen abgemischt. Der kontinuierliche Betrieb ist essentiell zur Erreichung einer kurzen Verweilzeit im Prozess. Hierfür wird ein Compounder eingesetzt, der wiederum besonders vorteilhaft aus einem Doppelschneckenextruder besteht. Der Doppelschneckenextruder kann gleich- oder gegenläufig betrieben werden. Durch die erhöhte Drehzahl (somit die erhöhte spezifische Antriebsenergie) im Vergleich zum Aufkonzentrationsextruder wird sichergestellt; dass genügend Scherenergie eingeführt wird, um Harze oder Weichmacher effizient einzumischen. Für das erfindungsgemäße Verfahren sollte die spezifische Antriebsenergie des Compounders bei weniger als 0,05 kWh/kg liegen. Die Schädigung des Polymers wird durch den Harz- oder Weichmacherzusatz vermieden, da diese Komponenten als "Lösungsmittel" dienen und somit die Schereinwirkung verringern. Die Harze/Weichmacher können als Feststoff oder aus oder Schmelze hinzudosiert werden. Durch die Zudosierung der Harze in einem zweiten Verfahrensschritt wird gewährleistet, dass Verunreinigungen aus den Harzen oder leichtflüchtige Bestandteile nicht im Aufkonzetrationsprozess in das recycelte Lösemittel gelangen und somit den Recyclingprozess beeinflussen können.

Als Harze sind beispielsweise Terpen-, Terpenphenolharze, C₅- und C₉-Kohlenwasserstoffharze, Pinen-, Inden- und Kolophoniumharze allein und auch in Kombination miteinander einsetzbar. Prinzipiell lassen sich aber alle in dem entsprechenden Polyacrylat löslichen Harze verwenden, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze.

Als Weichmacher lassen sich z.B. niedermolekulare Polyacrylate, Phthalate, Walöweichmacher oder Weichharze einsetzen. In einer bevorzugten Weiterentwicklung werden Phosphate/Polyphosphate eingesetzt. Durch die Additivierung der Acrylathaftklebemassen nach dem Aufkonzentrationsschritt wird eine weitere Verunreinigung des recycelten Lösungsmittels ausgeschlossen.

Weiterhin können im inline Prozess unter Strahlung vernetzende Substanzen, wie z.B. multifunktionelle Acrylate oder Urethanacrylate sowie Fotoinitiatoren der Acrylatschmelze zugemischt werden. Als Fotoinitiatoren können Benzophenon-, Acetophenon-, Benzil-, Benzoin-, Hydroxyalkylphenon-, Phenylcyclohexylketon-, Anthrachinon-, Thioxanthon-, Triazin-, oder Fluorenonderivate eingesetzt werden, wobei diese Aufzählung nicht abschließend sein soll.

Weiterhin können verschiedene Füllstoffe im inline Prozess, wie beispielsweise Ruß, TiO₂, Voll- oder Hohlkugeln aus Glas oder anderen Materialien, Keimbildner, Blähmittel, Compoundierungsmittel und/oder Alterungsschutzmittel, zugesetzt werden.

Der Acrylathotmelt wird aus der Schmelze auf ein Trägermaterial aufgetragen. Als Trägermaterial, beispielsweise für Klebebänder, lassen sich hierbei die dem Fachmann geläufigen und üblichen Materialien, wie Folien (Polyester, PET, PE, PP, BOPP, PVC), Vliese, Schäume, Gewebe und Gewebefolien sowie Trennpapier (Glassine, HDPE, LDPE) verwenden. Diese Aufzählung soll nicht abschließend sein.

Eine Weiterentwicklung, die das erfindungsgemäße Verfahren besonders günstig für die Herstellung von beispielsweise Klebebändern macht, zeichnet sich dadurch aus, dass die Haftklebemasse thermisch, durch UV-Strahlung oder durch ionisierende Stahlung, wie z.B. Elektronenstrahlung, vernetzt wird.

Weiterhin ist Inhalt der Erfindung die Verwendung der so erhaltenen Haftklebemasse für ein Klebeband, wobei die Acrylathaftklebemasse als ein- oder doppelseitiger Film auf einem Träger vorliegt.

Durch das Verfahren lassen sich scherfeste Haftklebebänder mit einem hohen mittleren Molekulargewicht herstellen. Im Gegensatz zum Batchverfahren ist eine kontinuierliche Produktion möglich, so dass die Haftklebemasse nur relativ kurzer Zeit einer thermischen Belastung ausgesetzt wird. Die inline Beimischung der Harze/Weichmacher erlaubt eine variable Herstellung von Haftklebemassen mit einem sehr unterschiedlichen Haftklebeprofil. Der in dieser Erfindung beschriebene 2-Stufen Prozess gewährleistet einen hohen Durchsatz für die Aufkonzentration, geringe Verweilzeiten, ein sehr geringe Polymerschädigung und das Recycling für das zur Polymerisation eingesetzte Lösungsmittel.

### Beispiele

Die Erfindung soll im folgenden durch einige Beispiele näher erläutert werden, ohne sich hierdurch unnötig beschränken zu wollen. Bei der Erläuterung anhand von Ausführungsbeispielen wird auch auf Abbildungen Bezug genommen; hierbei zeigen:
- Abb. 1:: Verfahrensablaufskizze;
- Abb. 2:: Vergleich der Molekulargewichtsverteilungen der Beispiele 1 - 3
- Abb. 3:: Vergleich der Molekulargewichtsverteilungen der Beispiele 3 und 4
- Abb. 4:: Vergleich der Molekulargewichtsverteilungen der Beispiele 5 - 6

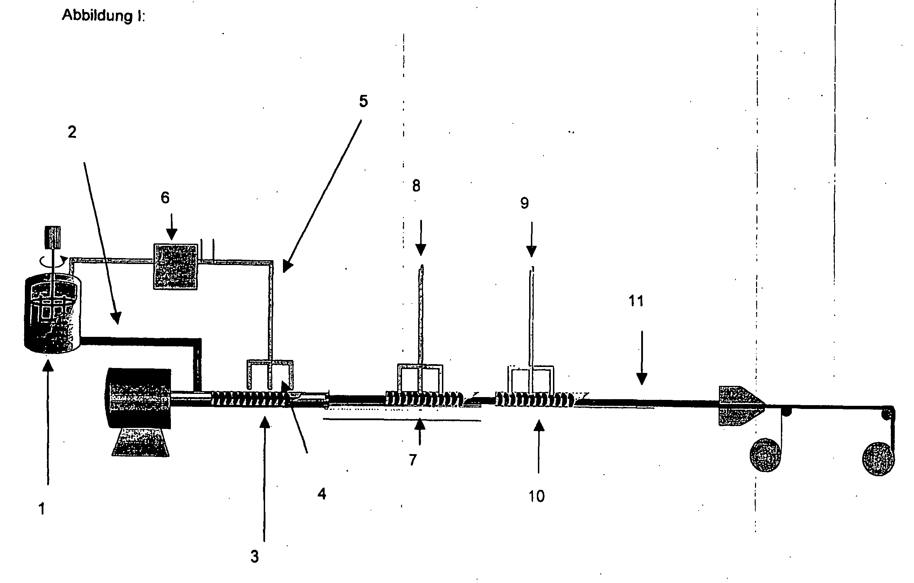

Abbildung 1 zeigt den Ablauf des Verfahrens schematisch im Überblick. Zur Herstellung der Polyacrylat-Haftklebemasse wird zunächst eine freie oder kontrollierte radikalische Polymerisation von Acrylatmonomer- bzw. Comonomergemischen in einem Polymerisationsreaktor 1 durchgeführt, der mit einem Rührer, mehreren hier nicht -dargestellten Zulaufgefäßen für die Komponenten, Rückflußkühler, Heizung und Kühlung versehen und für das Arbeiten unter Stickstoffatmosphäre im Überdruck ausgerüstet ist. Das fertig polymerisierte Polyacrylat verlässt den Polymerisationsreaktor über eine Leitung 2, die gleichzeitig den Zulauf des lösungsmittelhaltigen Polyacrylats zu einem ersten Doppelschneckenextruder, einem großvolumigen Aufkonzentrationsextruder 3, darstellt. Die Eintrittstemperatur der Polyacrylat-Lösung beträgt 120-140 °C. In dem Aufkonzentrationsextruder 3 wird das Lösungsmittel unter vermindertem Druck entfernt, und zwar in diesem Beispiel in drei Vakuumstufen. Der Aufkonzentrationsextruder wird mit einer solchen Drehzahl und Antriebsenergie betrieben, dass lange Verweilzeiten vermieden werden. Das aufkonzentrierte Polyacrylathotmelt verlässt den Extruder 3 mit einer Temperatur von ca. 120 °C. Das abdestillierte Lösungsmittel wird über eine Rücklaufleitung 5 in einen Lösemitteltank 6 kondensiert und gaschromatographisch analysiert. In den Lösemitteltank 6 wird frisches Lösungsmittel hinzugefügt und das ursprüngliche Mischungsverhältnis für die Polymerisation wird wieder hergestellt. Das auf diese Weise abgemischte und aufgefrischte Lösemittel wird wieder dem Polymerisationsreaktor 1 zugeführt.
Im zweiten Schritt des Verfahrens wird das aufkonzentrierte Acrylathotmelt in einem inline-Prozess mit Harzen abgemischt. Hierfür wird das Hotmelt aus dem Extruder 3 kommend einem Compoundierextruder 7 zugeführt. Der Compounder besteht wiederum aus einem Doppelschneckenextruder. An Position 8 werden Harze und Weichmacher in den Compoundierer 7 zugegeben, an Position 9 Alterungsschutzmittel und Vernetzer einem weiteren Compoundierer 10. Die Doppelschneckenextruder 3, 7 und 10 können gleich- oder gegenläufig betrieben werden. Nach Austritt aus dem letzten Compoundierer wird das fertig abgemischte Hotmelt über den Weg 11 einer Beschichtungsanlage zugeführt, die in der Skizze ebenfalls angedeutet ist. Auch während des Compoundierens wird das Polymer auf einer Temperatur von nicht mehr als 125 °C gehalten.

Im folgenden werden einige Beispiele für Acrylat-Hotmeltmassen und Untersuchungsergebnisse zu deren Eigenschaften angegeben.

### Testmethoden

Folgende Testmethoden wurden angewendet um die Eigenschaften der Acrylathotmelts zu evaluieren.

### Bestimmung der Abdampfrate (Test A)

Eine exakt ausgewogene Menge des Acrylathotmelts wurde in einem nach oben offenen Behälter in einem Vakuumofen für eine Stunde bei 0.1 mbar Druck und 140°C getempert. Nach der Temperaturbehandlung wurde wiederum gegengewogen. Die prozentuale Abnahme des Gewichtes korreliert mit der Flüchtigkeit.

### Bestimmung der Molekulargewichtes via GPC (Test B)

Die Bestimmung der mittleren Molekulargewichte Mₙ (Zahlenmittel) und M_{w} (Gewichtsmittel) und der Polydispersität D erfolgte durch Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 µ, 10³ Å, ID 8,0 mm x 50 mm verwendet. Zur Auftrennung wurden die Säulen PSS-SDV, 5 µ, 10³ sowie 10⁵ und 10⁶ mit jeweils ID 8,0 mm x 300 mm eingesetzt. Die Probenkonzentration betrug 4 g/l, die Durchflußmenge 1,0 ml pro Minute. Es wurde gegen Polystyrol-Standards gemessen.

### Bestimmung des Gelanteils (Test C)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert, also der nicht in Toluol lösliche Gewichtsanteil des Polymers bestimmt.

### Untersuchte Proben

Die für die Experimente verwendeten Proben wurden wie folgt hergestellt:

Die Polymere wurden konventionell über eine freie radikalische Polymerisation hergestellt.

### Beispiel 1

Ein für radikalische Polymerisationen konventioneller Reaktor wurde mit 80 kg Acrylsäure, 720 kg 2-Ethylhexylacrylat, und 600 kg Aceton/Isopropanol (97:3) befüllt. Nach 45 Minuten Durchleiten mit Stickstoffgas unter Rühren wurde der Reaktor auf 58°C hochgeheizt und 400 g Vazo 67^{™} (Fa. DuPont) hinzugegeben. Anschließend wurde das äußere Heizbad auf 75°C erwärmt und die Reaktion konstant bei dieser Außentemperatur durchgeführt. Nach 1 h Reaktionszeit wurde wiederum 400 g Vazo 67^{™} (Fa. DuPont) hinzugegeben. Die Reaktion wurde nach 48 h Reaktionszeit abgebrochen und auf Raumtemperatur abgekühlt. Zur Analyse wurde Testmethode B durchgeführt. Die Klebemasse wurden dann vom Lösungsmittel im Aufkonzentrationsextruder (W&P ZSK 58, L = 40 D) befreit. Der Extruder verfügte über eine Rückwärtsentgasung sowie 3 weitere Vakuumstufen. Das Vakuum der Rückwärtsentgasung betrug 300 mbar, die Vakuumstufe 1 wurde mit ca. 500 mbar betrieben, die Stufe 2 mit 250 mbar und die Stufe 3 mit 10 mbar betrieben. Die Eintrittstemperatur der Polymerlösung betrug ca. 140°C.
Die Drehzahl wurde auf 210 Umdrehungen pro Minute eingestellt, so dass der Extruder dabei mit einer spezifischen Antriebsenergie von 0,13 kWh/kg betrieben wurde. Der Durchsatz lag bei 160 kg/h Speiselösung. Die Austrittstemperatur der aufkonzentrierten Masse wurde zu 135°C bestimmt. Die Rückgewinnungsquote betrug 90 %. Das Lösemittel wurde von den ersten beiden Vakuumdomen aufgefangen, kondensiert und recycelt. Zur Analyse des Acrylathotmelts wurde Testmethode A und B durchgeführt. Der im Schmelzhaftkleber verbliebene Restlösemittelanteil betrug 0,07%.

Der Acrylathotmelt wurde anschließend zu einer Breitschlitzdüse weitergeleitet und dann mit 50 g/m² auf eine mit Saran-geprimerte PET-Folie beschichtet. Nach der Bestrahlung mit 40 kGy ES-Dosis wurde Testmethode C durchgeführt.

### Beispiel 2

Die Klebemasse aus Beispiel 1 wurde in einem gegenläufigen Doppelschneckenextruder der Firma Welding Engineers vom Lösungsmittel befreit. Der Extruder hatte eine Verfahrenslänge von 48 D bei einem Schneckendurchmesser von ca. D=51 mm. Der Extruder verfügt über 3 Vakuumstufen, die mit ca. 100 mbar betrieben wurden. Die Eintrittstemperatur der Polymerlösung betrug 30°C. Die Drehzahl wurde auf 103 Umdrehungen pro Minute eingestellt, so dass der Extruder dabei mit einer spezifischen Antriebsenergie von 0,11 kWh/kg betrieben wurde. Der Durchsatz lag bei 40 kg/h Speiselösung. Die Austrittstemperatur betrug 117°C. Die Rückgewinnungsquote betrug 91 %. Das Lösemittel wurde von den ersten beiden Vakuumdomen aufgefangen, kondensiert und recycelt. Zur Analyse des Acrylathotmelts wurde Testmethode A und B durchgeführt. Der im Schmelzhaftkleber verbliebene Restlösemittelanteil betrug 0,09%.
Der Acrylathotmelt wurde anschließend zu einer Breitschlitzdüse weitergeleitet und dann mit 50 g/m² auf eine mit Saran-geprimerte PET-Folie beschichtet. Nach der Bestrahlung mit 40 kGy ES-Dosis wurde Testmethode C durchgeführt.

### Beispiel 3

Das Polymerisat aus Beispiel 1 wurde aus Lösung über ein konventionelles Rakel auf eine mit Saran-geprimerte PET-Folie beschichtet und für 10 Minuten bei 120°C getrocknet. Der Masseauftrag betrug 50 g/m². Nach der Bestrahlung mit 40 kGy ES-Dosis wurde Testmethode C durchgeführt.

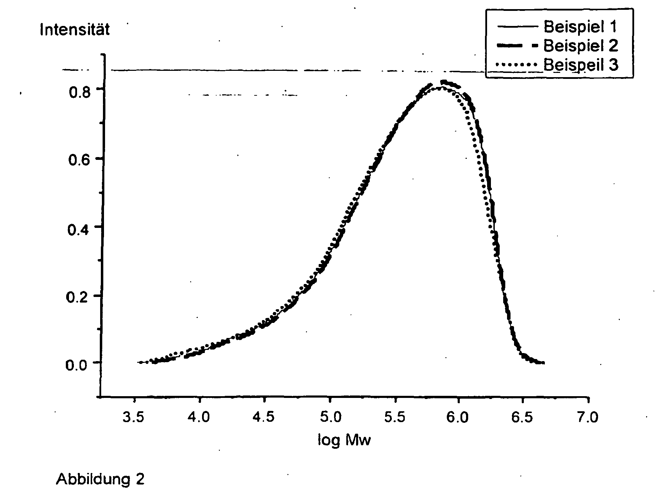

Abbildung 2 verdeutlicht, dass die Unterschiede in den Molekulargewichtsverteilungen sehr gering sind und somit das Polymer sehr schonend aufkonzentriert wird. Beide großvolumigen Aufkonzentrationsextruder bringen somit eine nur sehr geringe Scherung ein und verhindern so einen Molekulargewichtsabbau des Polymers.
Zur Beurteilung der Effizienz des Aufkonzentrationsprozesses wurde der Restlösemittelanteil nach der Aufkonzentrierung bestimmt. Die Messwerte sind in Tabelle 1 dargestellt:

| Tabelle 1 | |
|---|---|
| Beispiel | Test A Gewichtsverlust [%] |
| 1 | 0.3 |
| 2 | 0.2 |

Generell liegt der Anteil leichtflüchtiger Komponenten für die untersuchten Acrylathotmelts bei geringer als 0.5 %.
Zur weiteren Überprüfung wurden nochmals die Muster beschichtet und dann mit der identischen ES-Dosis bestrahlt. Anschließend wurde der Gelwert dieser Muster gemessen. Bei großem Molekulargewichtsabbau sinkt bei gleicher Dosis der Gelwert, da während der ES-Bestrahlung die Polymerketten statistisch von den Elektronen erfasst werden. Somit werden Polymere mit langen Polymerketten (hohes Molekulargewicht) bevorzugt vernetzt.
Die Ergebnisse der Bestrahlung sind in Tabelle 2 aufgelistet.

| Tabelle 2 | | |
|---|---|---|
| Beispiel | Gelwert [%] | ES-Dosis [kGy] |
| 1 | 54 | 40 |
| 2 | 53 | 40 |
| 3 | 54 | 40 |

| | | |
|---|---|---|
| 50 g/m² Masseauftrag | | |

Alle drei Beispiele zeigen keinen Einfluss bezüglich der ES-Vernetzbarkeit. Die Unterschiede liegen im Rahmen des Messfehlers, so dass durch die Aufkonzentration des Polymers keine die Qualität der Haftklebemasse unbeeinflusst bleibt.

Im folgenden soll die Qualität des Recyclingkonzeptes verglichen werden.

### Beispiel 4

Ein für radikalische Polymerisationen konventioneller Reaktor wurde mit 80 kg Acrylsäure, 720 kg 2-Ethylhexylacrylat und 540 kg recyceltes Lösemittel aus Beispiel 1 sowie 4.5 kg Isopropanol und 55.5 kg Aceton befüllt. Nach 45 Minuten Durchleiten mit Stickstoffgas unter Rühren wurde der Reaktor auf 58°C hochgeheizt und 400 g Vazo 67^{™} (Fa. DuPont) hinzugegeben. Anschließend wurde das äußere Heizbad auf 75°C erwärmt und die Reaktion konstant bei dieser Außentemperatur durchgeführt. Nach 1 h Reaktionszeit wurde wiederum 400 g Vazo 67^{™} (Fa. DuPont) hinzugegeben. Die Reaktion wurde nach 48 h Reaktionszeit abgebrochen und auf Raumtemperatur abgekühlt. Zur Analyse wurde Testmethode B durchgeführt. Die Klebemasse wurden dann analog Beispiel 1 vom Lösungsmittel befreit. Zur Analyse des Acrylathotmelts wurde Testmethode A und B durchgeführt.
Der Acrylathotmelt wurde anschließend zu einer Breitschlitzdüse weitergeleitet und dann mit 50 g/m² auf eine mit Saran-geprimerte PET-Folie beschichtet. Nach der Bestrahlung mit 40 kGy ES-Dosis wurde Testmethode C durchgeführt.

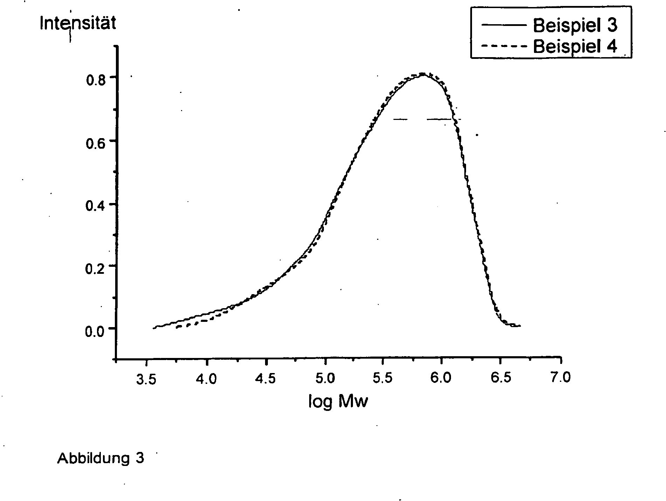

Abbildung 3 verdeutlicht, dass mit dem recycelten Lösemittel nahezu die identische Molekulargewichtsverteilung erzielt wird. Mit einem relativ geringen Anteil an Frischlösemittel (10%) lässt sich die Produktqualität beibehalten. Zur Überprüfung der Vernetzbarkeit wurde auch noch mal Beispiel 4 aufkonzentriert und mit Elektronenstrahlen vernetzt.

| Tabelle 3 | | |
|---|---|---|
| Beispiel | Gelwert [%] | ES-Dosis [kGy] |
| 3 | 54 | 40 |
| 4 | 54 | 40 |

| | | |
|---|---|---|
| 50 g/m² Masseauftrag | | |

Tabelle 3 verdeutlicht, dass das aufkonzentrierte Polyacrylat aus Beispiel 4 sich bei identischen ES-Dosis gleich effizient vernetzen lässt und somit keine Beeinträchtigung der klebtechnischen Eigenschaften vorliegen.

In den folgenden Beispielen wird der inline-Betrieb mit Harzbeimischung beschrieben.

### Beispiel 5

Ein für radikalische Polymerisationen konventioneller Reaktor wurde mit 8 kg Acrylsäure, 48 kg NTBAM, 8 kg Maleinsäureanhydrid, 368 kg 2-Ethylhexylacrylat, 368 kg n-Butylacrylat und 600 kg Aceton/Isopropanol (97:3) befüllt. Nach 45 Minuten Durchleiten mit Stickstoffgas unter Rühren wurde der Reaktor auf 58°C hochgeheizt und 400 g Vazo 67^{™} (Fa. DuPont) hinzugegeben. Anschließend wurde das äußere Heizbad auf 75°C erwärmt und die Reaktion konstant bei dieser Außentemperatur durchgeführt. Nach 1 h Reaktionszeit wurde wiederum 400 g Vazo 67^{™} (Fa. DuPont) hinzugegeben. Die Reaktion wurde nach 48 h Reaktionszeit abgebrochen und auf Raumtemperatur abgekühlt. Die Klebemasse wurde dann vom Lösungsmittel im Aufkonzentrationsextruder (W&P ZSK 58, L = 40 D) befreit. Das Vakuum der Rückwärtsentgasung betrug 250 mbar, die 3 Vakuumstufen wurden mit 300; 250 und 6 mbar betrieben. Die Eintrittstemperatur der Polymerlösung betrug 110°C. Die Drehzahl wurde auf 185 Umdrehungen pro Minute eingestellt, so dass der Extruder dabei mit einer spezifischen Antriebsenergie von 0,12 kWh/kg betrieben wurde. Der Durchsatz lag bei 110 kg/h Speiselösung entsprechend 51 kg/h Konzentrat. Als Austrittstemperatur wurden 117°C gemessen. Der Acrylathotmelt wurde an einen zweiten Doppelschneckenextruder der Fa. Krupp Werner und Pfleiderer (KWP ZSK 40, L = 36 D) weitergeleitet. Die Eintrittstemperatur des Acrylathotmelts betrug 117°C. Im zweiten Extruder wurde das Konzentrat mit 12,6. kg/h Harz Norsolene M1080^{™} (Fa Cray Valley), 6,3 kg/h Harz Foral 85 (Fa. Hercules) sowie 0,7 kg/h PETIA (Fa. UCB) compoundiert. Der Extruder wurde mit einer Drehzahl von 210 Umdrehungen pro Minute bei einer spezifischen Antriebsenergie von 0,009 kWh/kg betrieben. Der Gesamtdurchsatz lag bei 70 kg/h. Die Austrittstemperatur lag bei 114°C. Zur Analyse wurde Testmethode B durchgeführt.
Der Acrylathotmelt wurde anschließend zu einer Breitschlitzdüse weitergeleitet und dann mit 50 g/m² auf eine mit Saran-geprimerte PET-Folie beschichtet. Nach der Bestrahlung mit 60 kGy ES-Dosis wurde Testmethode C durchgeführt.

### Beispiel 6

Das Polymerisat aus Beispiel 5 wurde in Lösung mit 25 Gewichtsanteilen Norsolene M 1080^{™} (Fa. Cray Valley) abgemischt, über ein konventionelles Rakel auf eine mit Saran-geprimerte PET-Folie beschichtet und anschließend für 10 Minuten bei 120°C getrocknet. Der Masseauftrag betrug 50 g/m². Nach der Bestrahlung mit 60 kGy ES-Dosis wurde Testmethode C durchgeführt.

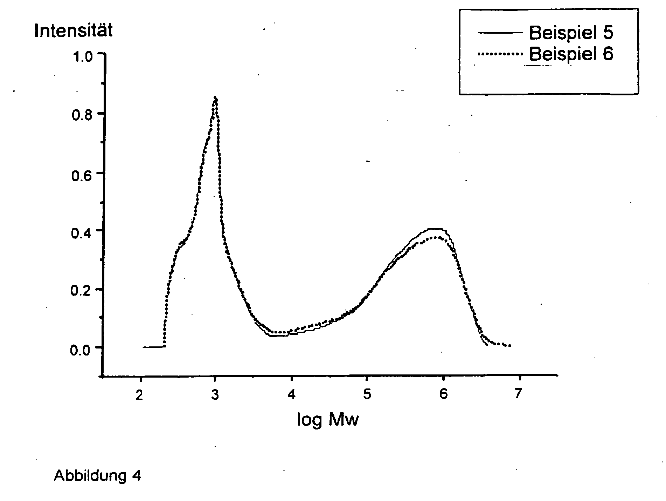

Abbildung 4 verdeutlicht, dass die Unterschiede in den Molekulargewichtsverteilungen sehr gering sind und somit das Polymer sehr schonend aufkonzentriert und auch nach der Harzdosierung durch den Compounder keine weitere Polymerschädigung stattfindet. Beide großvolumigen Aufkonzentrationsextruder bringen somit eine nur sehr geringe Scherung ein und verhindern so einen Molekulargewichtsabbau des Polymers. Durch einen Doppelschneckextruder mit höherer Drehzahl lässt sich das Harz sehr effizient einarbeiten.

Zur weiteren Überprüfung wurden nochmals die Muster beschichtet und dann mit der identischen ES-Dosis bestrahlt. Anschließend wurde der Gelwert dieser Muster gemessen. Bei großem Molekulargewichtsabbau sinkt bei gleicher Dosis der Gelwert, da während der ES-Bestrahlung die Polymerketten statistisch von den Elektronen erfasst werden. Somit werden Polymere mit langen Polymerketten (hohes Molekulargewicht) bevorzugt vernetzt.
Die Ergebnisse der Bestrahlung sind in Tabelle 4 aufgelistet.

| Tabelle 4 | | |
|---|---|---|
| Beispiel | Gelwert [%] | ES-Dosis [kGy] |
| 5 | 41 | 60 |
| G | 40 | 60 |

| | | |
|---|---|---|
| 50 g/m² Masseauftrag | | |

Alle Beispiele zeigen keinen Einfluss bezüglich der ES-Vernetzbarkeit. Die Unterschiede liegen im Rahmen des Messfehlers, so dass durch die Aufkonzentration des Polymers keine die Qualität der Haftklebemasse unbeeinflusst bleibt. Auch die Kompoundiergüte des Harzes ist gegeben. Würde sich das Harz nicht effizient einbauen lassen, so würde man auch Unterschiede in der Vernetzungsqualität erwarten.

### Legende für Abbildung 1:

- 1.: Polymerisationsreaktor
- 2.: Zulauf des lösungsmittelhaltigen Polyacrylates
- 3.: Aufkonzentrationsextruder
- 4.: Vakuumstufen (mehrere, hier 3)
- 5.: Kondensationsstrecke und Rücklauf des recyclten Lösemittels
- 6.: Lösemitteltank und Einstellung des geeigneten Mischverhältnisses
- 7.: Compoundierextruder
- 8.: Zugabe für Harze, Weichmacher
- 9.: Zugabe für Alterungsschutzmittel, Vernetzer
- 10.: Compoundierextruder
- 11.: Förderung des Acrylathotmelts zur Beschichtung

## Patentansprüche

1. Kontinuierliches, zweistufiges Verfahren zur polymerschonenden Herstellung von lösemittelfreien Polyacrylat-Schmelzhaftklebern unter Wiedereinsatz des verwendeten Lösemittels mit folgenden Verfahrenschritten:
a) Polymerisation einer Polyacrylatmasse zu einem Monomerumsatz von > 99% in einem Lösemittel bzw. Lösemittelgemisch, das bei 100 Pas eine Dampfdrucktemperatur von weniger als -10°C aufweist;
b) kontinuierliches Vermischen der Polymerlösung mit Zusatz- und Hilfsstoffen und Vorwärmen der Mischung unter erhöhtem Druck;
c) Aufkonzentration der Polymerlösung zu einem Restlösemittelgehalt von weniger als 0,1 Gew.-% in einem ersten Extruder unter Einfluss von Vakuum und erhöhten Extrudertemperaturen, wobei die spezifische Antriebsenergie für die dabei erzeugten Polyacrylat-Haftklebemassen mit einer durchschnittlichen Molekularmasse M_{w} von 600.0000 bis 900.000 g/mol weniger als 0,18 kWh/kg beträgt und dabei eine Temperatur der Haftklebmasse im Austritt des Extruders von nicht mehr als 135°C erhalten wird;
d) Kondensation, Auffangen und Wiedereinsatz unter a) des im Extruder abgezogenen Lösemittels in einer Quote von mehr als 80% der verwendeten Menge;
e) Compoundierung der vom Lösemittel befreiten Haftklebemasse mit klebrigmachenden Harzen, Füllstoffen, Stabilisatoren, Vernetzern oder anderen Additiven in einem zweiten Extruder mit einer spezifischen Antriebsenergie von weniger als 0,05 kWh/kg, wobei eine Temperatur der Klebmasse im Austritt des Extruders von nicht mehr als 125°C erhalten wird;
f) Übergabe der fertig abgemischten lösungsmittelfreien Haftklebemasse an eine nachfolgende Beschichtungseinheit.

2. Verfahren nach Anspruch 1, **dadurch gekennzeichnet, dass** als Hilfs- und Zusatzstoffe Antioxidantien zugegeben werden.

3. Verfahren nach Anspruch 1 oder 2, **dadurch gekennzeichnet, dass** als Lösemittel vorzugsweise Aceton verwendet wird oder vorzugsweise Hauptbestandteil des Lösemittelgemisches ist.

4. Verfahren nach einem der Ansprüche 1 bis 3, **dadurch gekennzeichnet, dass** die Polymerlösung vor Eintritt in den Aufkonzentrationsextruder unter erhöhtem Druck auf Temperaturen zwischen 100 und 160°C, vorzugsweise zwischen 110 und 150°C und besonders bevorzugt zwischen 120 und 140°C aufgeheizt wird, ohne dass es dabei zum Sieden der Polymerlösung kommt.

5. Verfahren nach Anspruch 4, **dadurch gekennzeichnet, dass** das Fremdlösemittel zu weniger als 10%, vorzugsweise zu weniger als 5% im Acetonlösemittelgemisch enthalten ist.

6. Verfahren nach einem der Ansprüche 1 bis 5, **dadurch gekennzeichnet, dass** die Zusammensetzung des kondensierten Lösemittelgemisches in einem Zwischentank durch Zumischen einer oder mehrer Komponenten vor dem Wiedereinsatz zur Polymerisation auf das gewünschte Verhältnis eingestellt wird.

7. Verfahren nach mindestens einem der vorhergenannten Ansprüche, **dadurch gekennzeichnet, dass** als Aufkonzentrations- und Compoundieraggregat jeweils ein Doppelschneckenextruder verwendet wird.

8. Verfahren nach mindestens einem der vorhergenannten Ansprüche, **dadurch gekennzeichnet, dass** das Verhältnis der freien Volumina von Aufkonzentrationsextruder zu Compoundierungsextruder größer als 3, vorzugsweise größer als 3,5 ist.

9. Verwendung der mit dem Verfahren nach einem der Ansprüche 1 bis 8 erhaltenen Haftklebemasse für die ein- oder doppelseitige Beschichtung von Klebebändern.

## Claims

1. Continuous two-stage process for preparing solvent-free polyacrylate hotmelt pressure sensitive adhesives which is gentle on the polymer and reemploys the solvent used in the process, and which comprises the following steps:
a) polymerizing a polyacrylate pressure sensitive adhesive to a monomer conversion of > 99% in a solvent or solvent mixture having a vapor pressure temperature at 100 Pas of less than -10°C;
b) continuously mixing the polymer solution with additives and auxiliaries and preheating the mixture under superatmospheric pressure;
c) concentrating the polymer solution to a residual solvent content of less than 0.1 % by weight in a first extruder, under the effect of reduced pressure and increased extruder temperatures, the specific drive energy for the polyacrylate pressure sensitive adhesives produced, having an average molecular mass M_{w} of from 600 000 to 900 000 g/mol, being less than 0.18 kWh/kg, while maintaining a temperature of the adhesive at the outlet of the extruder of not more than 135 °C;
d) condensing, collecting, and re-using in a) the solvent stripped off in the extruder, in a proportion of more than 80% of the amount used;
e) compounding the solvent-freed pressure sensitive adhesive with tackifying resins, fillers, stabilizers, crosslinkers or other additives in a second extruder with a specific drive energy of less than 0.05 kWh/kg while maintaining a temperature of the adhesive at the outlet of the extruder of not more than 125°C; and
f) transferring the blended solvent-free pressure sensitive adhesive to a downstream coating unit.

2. Process according to Claim 1, **characterized in that** antioxidants are added as auxiliaries and additives.

3. Process according to Claim 1 or 2, **characterized in that** acetone is used preferably as solvent or is preferably a major constituent of the solvent mixture.

4. Process according to any of Claims 1 to 3, **characterized in that** the polymer solution is heated under elevated pressure to temperatures of between 100 and 160°C, preferably between 110 and 150°C, and with particular preference between 120 and 140°C before it enters the concentrating extruder, without the polymer solution being boiled.

5. Process according to Claim 4, **characterized in that** the amount of foreign solvent in the acetone solvent mixture is less than 10%, preferably less than 5%.

6. Process according to any of Claims 1 to 5, **characterized in that** the composition of the condensed solvent mixture is set to the desired ratio in an intermediate tank by admixing of one or more components before the solvent mixture is reemployed for the polymerization.

7. Process according to at least one of the aforementioned claims, **characterized in that** one twin-screw extruder each is used as concentrating apparatus and compounding apparatus.

8. Process according to at least one of the aforementioned claims, **characterized in that** the ratio of the free volumes of concentrating extruder to compounding extruder is more than 3, preferably more than 3.5.

9. Use of the pressure sensitive adhesive obtained by the process according to any of Claims 1 to 8 for the single-sided or double-sided coating of adhesive tapes.

## Revendications

1. Procédé continu à deux étapes pour la préparation, ménageant les polymères, de masses auto-adhésives en masse fondue à base de polyacrylate, exemptes de solvant, avec réutilisation du solvant utilisé, présentant les étapes de procédé suivantes:
a) polymérisation d'une masse de polyacrylate jusqu'à une transformation des monomères > 99% dans un solvant ou un mélange de solvants qui présente, à 100 Pa.s, une température de tension de vapeur inférieure à -10°C ;
b) mélange continu de la solution polymère avec des additifs et des adjuvants et préchauffage du mélange sous pression élevée ;
c) concentration de la solution polymère jusqu'à une teneur résiduelle en solvant inférieure à 0,1% en poids dans une première extrudeuse sous influence du vide et des températures élevées de l'extrudeuse, l'énergie d'entraînement spécifique pour les masses auto-adhésives à base de polyacrylate produites avec une masse moléculaire moyenne M_{w} de 600 000 à 900 000 g/mole étant inférieure à 0,18 kWh/kg et la température de la masse auto-adhésive à la sortie de l'extrudeuse ne dépassant pas 135°C ;
d) condensation, récupération et réutilisation du solvant éliminé au point a) de l'extrudeuse en une proportion supérieure à 80% de la quantité utilisée ;
e) compoundage de la masse auto-adhésive libérée du solvant avec des résines rendant adhésif, des charges, des stabilisateurs, des réticulants ou d'autres additifs dans une deuxième extrudeuse avec une énergie d'entraînement spécifique inférieure à 0,05 kWh/kg la température de la masse adhésive à la sortie de l'extrudeuse ne dépassant pas 125°C ;
f) transfert de la masse auto-adhésive exempte de solvant mélangée finie dans une unité de revêtement consécutive.

2. Procédé selon la revendication 1, **caractérisé en ce qu'**on ajoute comme adjuvants et additifs des antioxydants.

3. Procédé selon la revendication 1 ou 2, **caractérisé en ce qu'**on utilise comme solvant de préférence de l'acétone ou l'acétone est de préférence le constituant principal du mélange de solvants.

4. Procédé selon l'une quelconque des revendications 1 à 3, **caractérisé en ce que** la solution polymère, avant l'entrée dans l'extrudeuse de concentration est chauffée, sous pression élevée, à des températures entre 100 et 160°C, de préférence entre 110 et 150°C et de manière particulièrement préférée entre 120 et 140°C, sans porter la solution polymère à ébullition.

5. Procédé selon la revendication 4, **caractérisé en ce que** des solvants étrangers sont contenus à raison de moins de 10%, de préférence à raison de moins de 5% dans le mélange de solvants à base d'acétone.

6. Procédé selon l'une quelconque des revendications 1 à 5, **caractérisé en ce que** la composition du mélange de solvants condensé est réglée, dans un réservoir intermédiaire, par incorporation d'un ou de plusieurs composants, avant la réutilisation pour la polymérisation, au rapport souhaité.

7. Procédé selon au moins l'une quelconque des revendications précédentes, **caractérisé en ce qu'**on utilise comme appareil de concentration et de compoundage à chaque fois une extrudeuse à double vis sans fin.

8. Procédé selon au moins l'une quelconque des revendications précédentes, **caractérisé en ce que** le rapport du volume libre de l'extrudeuse de concentration à celui de l'extrudeuse de compoundage est supérieur à 3, de préférence supérieur à 3,5.

9. Utilisation de la masse auto-adhésive obtenue par le procédé selon l'une quelconque des revendications 1 à 8 pour un revêtement monoface ou double face de bandes adhésives.
